# EUROPÄISCHE PATENTSCHRIFT

(11) **EP 1 456 550 B1**
(45) Veröffentlichungstag und Bekanntmachung des Hinweises auf die Patenterteilung: **08.02.2006**
(21) Anmeldenummer: 02795135.9
(22) Anmeldetag: 10.12.2002
(51) Int. Cl.: F16D 23/04

(54) **SCHIEBEMUFFE FÜR EINE SCHALTEINRICHTUNG**
SLIDING SLEEVE FOR A SHIFT DEVICE
MANCHON COULISSANT POUR UN MECANISME DE CHANGEMENT DE VITESSE

(30) Priorität: 22.12.2001 DE 10163830
(43) Veröffentlichungstag der Anmeldung: 15.09.2004
(73) Patentinhaber: INA-Schaeffler KG, 91074 Herzogenaurach (DE)
(72) Erfinder: KÖBERLEIN, Markus, 96138 Burgebrach (DE); STERKER, Rainer, 97714 Oerlenbach (DE)
(86) Internationale Anmeldenummer: PCT/EP2002/013980
(87) Internationale Veröffentlichungsnummer: WO 2003/056201

(56) Entgegenhaltungen:
- EP-A- 1 231 396
- US-B1- 6 216 550
- PATENT ABSTRACTS OF JAPAN vol. 006, no. 216 (M-168), 29. Oktober 1982 (1982-10-29) & JP 57 120729 A (TOYO KOGYO KK), 27. Juli 1982 (1982-07-27)

## Beschreibung

### Gebiet der Erfindung

Schiebemuffe für eine Schalteinrichtung, insbesondere für Kraftfahrzeuggetriebe, mit einer Innenverzahnung, wobei die Schiebemuffe mittels der Innenverzahnung mit einer zugeordneten Außenverzahnung eines Zentralkörpers drehfest aber verschiebbar verbunden ist und mit einer Außenverzahnung eines Gangradabschnittes oder einer mit dem Gangrad drehfest verbundenen Kupplungsscheibe kuppelbar ist.

Die Erfindung betrifft auch ein Verfahren zum Herstellen einer Schiebemuffe.

### Hintergrund der Erfindung

Eine derartige gattungsbildende Schiebemuffe ist aus der DE-198 20 654 A1 bekannt. Gegenstand dieser Patentanmeldung ist die Herstellung der Schiebemuffe aus einem Muffenkörper aus Blech mittels eines spanlosen Formgebungsprozesses und die Anformung beziehungsweise Befestigung von Schaltgabelführungen auf dem Außenumfang des Muffenkörpers. Derartige Schiebemuffen sind zumeist mittels einer Rasteinrichtung in der Mittelstellung auf dem Zentralkörper festgelegt, um ein ungewolltes Verschieben der Schiebemuffe zu verhindern. Erst nach Überwindung der Druckkraft der Rasteinrichtung kann die Schiebemuffe verschoben werden.

Um eine einfache Montage der Schiebemuffe auf dem Zentralkörper beziehungsweise der Rasteinrichtung zu gewährleisten, ist es bekannt, die Schiebemuffe im Inneren mit einer umlaufenden Nut zu versehen, in die der Rastkörper der Rasteinrichtung eingreifen kann.

Da dies aber zu Schwächungen der Schiebemuffe führen kann, ist es bekannt, DE- 199 32 300 A1, eine Ausprägung im Bereich eines Zahnes der Innenverzahnung der Schiebemuffe vorzusehen, die eine Vertiefung für den Rastkörper der Rasteinrichtung bildet und gleichzeitig die benachbarten Zahnlücken teilweise auffüllt, um ein richtungsorientiertes Aufsetzen der Schiebemuffe auf den Zentralkörper zu gewährleisten, wenn dieser im Bereich der Rasteinrichtung eine achsparallel verlaufende Aussparung hat. Diese in die Zahnlücken fließende Materialverdrängung reicht aus, um ein richtungsorientiertes Aufsetzen der Schiebemuffe auf den Zentralkörper zu gewährleisten, nicht aber um grö-ßere Kräfte aufzunehmen und als Anschlag zu dienen, zumal ihre räumliche Anordnung durch die Zuordnung zur Rasteinrichtung festgelegt ist.

Weiterhin besteht das Problem, dass die Schiebemuffe nach Überwindung des Rastwiderstandes zu weit auf das Gangrad beziehungsweise über die Kupplungsscheibe hinaus bis zum Gangrad verschoben wird. Das kann zum einen zu Schäden führen, zum anderen wird ein unnötig großer Schaltweg zurückgelegt, wodurch die Schaltzeiten, insbesondere bei automatisch gesteuerten Schaltgetrieben, unerwünscht verlängert werden.

In der JP 57120729 wird dieses Problem durch einen spanend hergestellten Anschlag gelöst. Dadurch ist es möglich, den Anschlag so auszibilden, dass er Kräfte aufnehmen kann. Die spanende Nachbearbeitung ist allerdings aufwändig und eignet sich daher nicht so gut für eine Massenfertigung.

### Aufgabe der Erfindung

Aufgabe der Erfindung ist es daher, eine Schiebemuffe für eine Schalteinrichtung oder eine Schalt- und Synchronisiereinrichtung insbesondere für Kraftfahrzeuge so zu gestalten, dass die oben angeführten Nachteile behoben und das geschilderte Problem gelöst wird.

### Zusammenfassung der Erfindung

Die Aufgabe der Erfindung wird dadurch gelöst, dass in zumindest einer der Zahnlücken der Innenverzahnung ein Anschlag vorgesehen ist, welcher mittels eines Scher-/Prägevorgangs hergestellt ist. Dieser zumindest eine Anschlag kann an einer beliebigen Stelle der Zahnlücke entlang der Breite der Schiebemuffe angeordnet sein und als Hilfe zum richtungsorientierten Aufsetzen der Schiebemuffe auf den Zentralkörper und als Begrenzung der Schiebemuffe beim Kuppeln derselben mit der Außenverzahnung des Gangradabschnittes oder der Kupplungsscheibe dienen.
Die Anschläge sind mittels eines Scher-/Prägevorganges hergestellt, wobei in besonders vorteilhafter Weise der Scher-/Prägevorgang derart einseitig beziehungsweise ungleichmäßig vorgenommen wird, dass die Anschläge nasenförmig ausgebildet sind und einen am Grundmaterial befestigten, angeformten Bereich sowie einen abgescherten Bereich aufweisen. Auf diese Weise können die Anschläge besonders kostengünstig hergestellt werden. Zusätzlich stellt der abgescherte Bereich eine definierte Fläche beziehungsweise Kante dar, die als exakter Anschlag benutzt werden kann. Deshalb ist der abgescherte Bereich der Anschläge vorzugsweise den Rändern der Schiebemuffe zugewandt, so dass eine genau definierte Begrenzung der Verschiebung der Schiebemuffe auf den Gangradbereich beziehungsweise die Kupplungsscheibe hin gewährleistet ist.

In einer bevorzugten Ausgestaltung der Erfindung wird vorgeschlagen, dass in einer Zahnlücke, vorzugsweise mit Abstand zu den Rändern der Schaltmuffe, zwei Anschläge vorgesehen sind. Dadurch wird beim Aufsetzen der Schiebemuffe auf den Zentralkörper von beiden Seiten her eine Orientierungshilfe geboten und zum anderen sind zwei Begrenzungsanschläge in Bezug auf die Außenverzahnung des Gangradabschnittes beziehungsweise der Kupplungsscheibe als Begrenzung in beiden Bewegungs- oder Schaltrichtungen gegeben.

Gemäß Patentanspruch 3 sind in benachbarten Zahnlücken je ein oder zwei Anschläge vorgesehen, so dass die Anschlagflächen vergrößert sind.

Zwei Anschläge in einer Zahnlücke beziehungsweise zwei Anschläge in zwei Zahnlücken können dicht aneinander in der Mitte der Schiebemuffe angeordnet werden und als Rampen für den Rastkörper der Rasteinrichtung dienen. Dies trifft auch für Anschläge in zwei benachbarten Zahnlücken zu, wobei dann vorzugsweise ein Teil des Zahnes zwischen den Anschlägen entfernt wird, um eine Vertiefung für den Rastkörper herzustellen.

### Kurze Beschreibung der Zeichnungen

Zur weiteren Erläuterung der Erfindung wird auf die Zeichnungen verwiesen, in denen ein Ausführungsbeispiel der Erfindung vereinfacht dargestellt ist. Es zeigen:
- Figur 1: eine Seitenansicht eines geraden Ausschnittes einer Schiebemuffe,
- Figur 2: eine Ansicht auf die Innenseite des geraden Ausschnittes der Schiebemuffe,
- Figur 3: einen Schnitt durch die Schiebemuffe gemäß der Linie III - III in Figur 2 und
- Figur 4: eine Außenansicht des geraden Ausschnittes der Schiebemuffe.

### Detaillierte Beschreibung der Zeichnungen

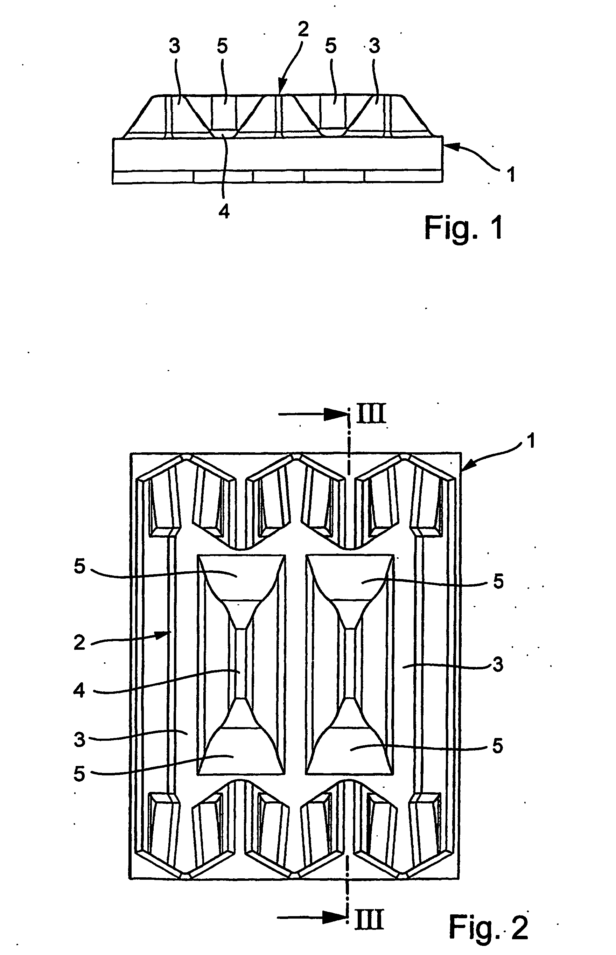

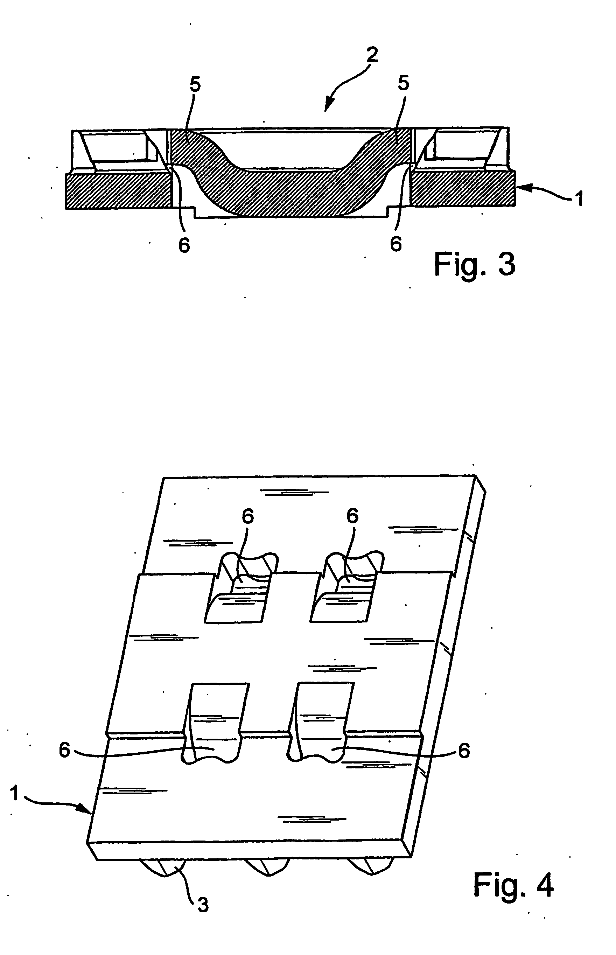

In den Figuren 1 bis 4 ist, soweit im einzelnen dargestellt, mit 1 ein gerader Ausschnitt einer Schiebemuffe bezeichnet, der auf der einen Seite eine Innenverzahnung 2 aufweist, die im wesentlichen die vollständige Breite der Schiebemuffe einnimmt. Die Innenverzahnung 2 weist Zähne 3 und Zahnlücken 4 auf, die sich zur Bildung der Innenverzahnung abwechseln. In zwei benachbarten Zahnlücken 4 sind Anschläge 5 vorgesehen, die, siehe insbesondere Figur 3, nasenförmig geformt sind. Die Anschläge 5 sind mittels eines Scher-/Prägevorganges hergestellt und der einander zugewandte Bereich der Anschläge ist mit dem Grundmaterial fest verbunden. Der abgewandte Bereich ist von dem Grundmaterial abgeschert, so dass die Anschläge im wesentlichen in der vollen Materialstärke vorstehen und einen exakten, auch größere Kräfte aufnehmenden Anschlag bilden. Zwischen den vorstehenden Bereichen der Anschläge und dem Grundmaterial der Schiebemuffe bzw. dem Zahnlückengrund entstehen daher mit 6 bezeichnete Öffnungen.

### Bezugszeichenliste

- 1: Schiebemuffe
- 2: Innenverzahnung
- 3: Zahn
- 4: Zahnlücke
- 5: Anschlag
- 6: Öffnung

## Patentansprüche

1. Schiebemuffe für eine Schalteinrichtung, insbesondere für Kraftfahrzeuggetriebe, mit einer Innenverzahnung (2), wobei die Schiebemuffe (1) mittels der Innenverzahnung (2) mit einer zugeordneten Außenverzahnung eines Zentralkörper drehfest aber verschiebbar verbindbar ist und mit einer Außenverzahnung eines Gangradabschnittes oder einer mit einem Gangrad drehfest verbundenen Kupplungsscheibe kuppelbar ist und wobei die Schiebemuffe aus Bandmaterial besteht, **dadurch gekennzeichnet, dass** in zumindest einer Zahnlücke (4) der Innenverzahnung (2) ein Anschlag (5) vorgesehen ist, welcher mittels eines Scher-/Prägevorgangs hergestellt ist.

2. Schiebemuffe nach Anspruch 1, **dadurch gekennzeichnet, dass** in einer Zahnlücke (4) vorzugsweise mit Abstand zu den Rändern der Schaltmuffe (1) zwei Anschläge (5) vorgesehen sind.

3. Schiebemuffe nach einem der Ansprüche 1 oder 2, **dadurch gekennzeichnet, dass** in benachbarten Zahnlücken (4) je ein oder zwei Anschläge (5) vorgesehen sind.

4. Schiebemuffe nach Anspruch 1, **dadurch gekennzeichnet, dass** der Scher-/Prägevorgang derart ungleichmäßig durchgeführt ist, dass die Anschläge (5) nasenförmig ausgebildet sind und einen am Grundmaterial befestigten Bereich sowie einen abgescherten Bereich aufweisen.

5. Schiebemuffe nach einem der Ansprüche 1 oder 4, **dadurch gekennzeichnet, dass** der abgescherte Bereich den Rändern der Schiebemuffe (1) zugewandt ist.

6. Schiebemuffe nach einem der vorhergehenden Ansprüche, **dadurch gekennzeichnet, dass** zwei in einer Zahnlücke (4) angeordnete Anschläge (5) dicht beieinander in der Mitte der Schiebemuffe (1) angeordnet sind und zum richtungsorientierten Aufsetzen der Schiebemuffe (1) auf den Zentralkörper und/oder als Rampen für ein Rastelement dienen.

7. Schalteinrichtung, insbesondere für Kraftfahrzeuggetriebe mit einer Scheibemuffe nach einen der vorhergehenden Ansprüche, wobei die Schiebemuffe (1) mittels der Innenverzahnung (2) mit einer zugeordneten Außenverzahnung eines Zentralkörper drehfest aber verschiebbar verbunden ist und mit einer Außenverzahnung eines Gangradabschnittes oder einer mit einem Gangrad drehfest verbundenen Kupplungsscheibe kuppelbar ist, **dadurch gekennzeichnet, dass** im eingekuppelten Zustand die Breite der über das Gangrad oder die Kupplungsscheibe hinaus weisenden Au-ßenverzahnung etwa dem Abstand der Anschläge (5) von den Rändern der Schiebemuffe (1) entspricht.

8. Verfahren zum Herstellen einer Schiebemuffe für ein Kraftfahrzeuggetriebe mit einer Innenverzahnung (2), wobei die Schiebemuffe (1) mittels der Innenverzahnung (2) mit einer zugeordneten Außenverzahnung eines Zentralkörper drehfest aber verschiebbar verbindbar ist und mit einer Außenverzahnung eines Gangradabschnittes oder einer mit einem Gangrad drehfest verbundenen Kupplungsscheibe kuppelbar ist, **dadurch gekennzeichnet, dass** in einem ersten Schritt in Bandmaterial mit Stimenden eine Innenverzahnung (2) mit Zähnen und Zahnlücken (4) eingebracht wird, dass in einem zweiten Schritt in zumindest einer Zahnlücke (4) der Innenverzahnung (2) mittels eines Scher-/Prägevorgangs mindestens ein Anschlag (5) eingearbeitet wird und dass in einem dritten Schritt die Stirnenden durch Biegen und Verbinden miteinander befestigt werden.

## Claims

1. Sliding sleeve for a gearshift device, in particular for motor-vehicle gearboxes, said sliding sleeve (1) comprising an inner gearing (2) through which the sliding sleeve (1) can be fixed in rotation to an associated outer gearing of a central body while being capable of sliding, said sliding sleeve further being adapted to be coupled to an outer gearing of a gearwheel section or of a clutch plate that is fixed in rotation to a gearwheel, and said sliding sleeve being made of strip material, **characterised in that** a stop (5) made by a shearing and stamping procedure is provided in at least one tooth gap (4) of the inner gearing (2).

2. Sliding sleeve according to claim 1, **characterised in that** two stops (5) are arranged in one tooth gap (4), preferably at a distance from the edges of the switching sleeve (1).

3. Sliding sleeve according to claim 1 or 2, **characterised in that** one or two stops (5) are arranged in adjoining tooth gaps (4).

4. Sliding sleeve according to claim 1, **characterised in that** the shearing and stamping procedure is carried out non-uniformly in such a manner that the stops (5) have a lug-like configuration and comprise one region fixed to the base material and one sheared-off region.

5. Sliding sleeve according to claim 1 or 4, **characterised in that** the sheared-off region is oriented towards the edges of the sliding sleeve (1).

6. Sliding sleeve according to one of the preceding claims, **characterised in that** two stops (5) disposed in one tooth gap (4) are arranged very close to each other at the centre of the sliding sleeve (1) and serve for placing the sliding sleeve (1) in the right direction on the central body and/or as ramps for a detent element.

7. Gearshift device, in particular for motor-vehicle gearboxes, said gearshift device comprising a sliding sleeve according to one of the preceding claims, said sliding sleeve (1) being fixed in rotation by means of the inner gearing (2) to an associated outer gearing of a central body while being capable of sliding, said sliding sleeve further being adapted to be coupled to an outer gearing of a gearwheel section or of a clutch plate that is fixed in rotation to a gearwheel, **characterised in that**, in the coupled state, the width of the outer gearing projecting beyond the gearwheel or the clutch plate corresponds approximately to the distance of the stops (5) from the edges of the sliding sleeve (1).

8. Method of making a sliding sleeve for a motor-vehicle gearbox, said sliding sleeve (1) comprising an inner gearing (2) through which the sliding sleeve (1) can be fixed in rotation to an associated outer gearing of a central body while being capable of sliding, said sliding sleeve further being adapted to be coupled to an outer gearing of a gearwheel section or of a clutch plate that is fixed in rotation to a gearwheel, **characterised in that**, in a first step, an inner gearing (2) comprising teeth and tooth gaps (4) is made in strip material having front ends, in a second step, at least one stop (5) is made by a shearing and stamping procedure in at least one tooth gap (4) of the inner gearing (2), and in a third step, the front ends are fixed to each other by bending and joining.

## Revendications

1. Manchon coulissant pour un dispositif de changement de vitesse, plus particulièrement pour des boîtes de vitesses de véhicules automobiles, ledit manchon coulissant (1) ayant une denture intérieure (2) à l'aide de laquelle ce manchon coulissant (1) peut être relié, fixe en rotation mais mobile en coulissement, à une denture extérieure associée d'un corps central, ledit manchon coulissant (1) étant, en plus, adapté à être accouplé à une denture extérieure d'une section d'une roue dentée ou d'un disque d'embrayage qui est immobilisé en rotation sur une roue dentée, et ledit manchon coulissant étant fait de matériau en forme de feuillard, **caractérisé en ce que**, une butée (5) fabriquée par un procédé de cisaillement et d'estampage est prévue dans au moins un entredent (4) de la denture intérieure (2).

2. Manchon coulissant selon la revendication 1, **caractérisé en ce que**, deux butées (5) sont prévues dans un seul entredent (4) en étant agencées, de préférence, à distance des bords du manchon coulissant (1).

3. Manchon coulissant selon une des revendications 1 ou 2, **caractérisé en ce que**, une ou deux butées (5) sont prévues dans des entredents (4) adjacents.

4. Manchon coulissant selon la revendication 1, **caractérisé en ce que** le procédé de cisaillement et d'estampage est exécuté de manière non uniforme, de telle sorte que les butées (5) ont une configuration en forme d'un talon et comprennent une région qui est fixée au matériau de base, et une région cisaillée.

5. Manchon coulissant selon une des revendications 1 ou 4, **caractérisé en ce que** la région cisaillée est orientée vers les bords du manchon coulissant (1).

6. Manchon coulissant selon l'une des revendications précédentes, **caractérisé en ce que** deux butées (5) disposées dans un seul entredent (4) sont agencées tout près, l'une de l'autre, au centre du manchon coulissant (1) et servent au placement du manchon coulissant (1) dans une direction déterminée sur le corps central, et/ou elles servent de rampes pour un élément d'arrêt.

7. Dispositif de changement de vitesse, plus particulièrement pour des boîtes de vitesses de véhicules automobiles, ledit dispositif comprenant un manchon coulissant selon l'une des revendications précédentes, ce manchon coulissant étant relié, fixe en rotation mais mobile en coulissement, à une denture extérieure associée d'un corps central, et ledit manchon coulissant étant adapté à être accouplé à une denture extérieure d'une section d'une roue dentée ou d'un disque d'embrayage qui est immobilisé en rotation sur une roue dentée, **caractérisé en ce que**, à l'état de couplage, la largeur de la denture en saillie par rapport à la roue dentée ou par rapport au disque d'embrayage correspond approximativement à la distance des butées (5) aux bords du manchon coulissant (1).

8. Méthode de fabriquer un manchon coulissant pour une boîte de vitesses d'un véhicule automobile, ledit manchon coulissant (1) comprenant une denture intérieure (2) à l'aide de laquelle ledit manchon coulissant (1) peut être relié, fixe en rotation mais mobile en coulissement, à une denture extérieure associée d'un corps central, ledit manchon coulissant (1) étant, en plus, adapté à être accouplé à une denture extérieure d'une section d'une roue dentée ou d'un disque d'embrayage qui est immobilisé en rotation sur une roue dentée, **caractérisé en ce que**, dans une première étape, une denture intérieure (2) comprenant des dents et des entredents (4) est produite dans du matériau en forme de feuillard ayant des côtés frontaux, dans une deuxième étape, au moins une butée (5) est formée par un procédé de cisaillement et d'estampage dans au moins un entredent (4) de la denture intérieure (2), et, dans une troisième étape, les côtés frontaux sont fixés, l'un à l'autre, par cintrage et reliage.
